# EUROPEAN PATENT SPECIFICATION

(11) **EP 2 811 692 B1**
(45) Date of publication and mention of the grant of the patent: **08.08.2018**
(21) Application number: 13305735.6
(22) Date of filing: 03.06.2013
(51) Int. Cl.: H04L 12/26, H04L 29/08, H04L 12/24, H04L 29/06

(54) **Methods and systems for monitoring the quality-of-experience of an application available over a network**
Verfahren und Systeme zur Überwachung der Erfahrungsqualität einer über ein Netzwerk verfügbaren Anwendung
Procédés et systèmes pour surveiller la qualité de l'expérience d'une application sur un réseau

(43) Date of publication of application: 10.12.2014
(73) Proprietor: Alcatel Lucent, 91620 Nozay (FR)
(72) Inventor: Kerboeuf, Sylvaine, 91620 Nozay (FR); Randriamasy, Sabine, 91620 Nozay (FR); Faucheux, Frédéric, 91620 Nozay (FR)
(74) Representative: Berthier, Karine

(56) References cited:
- WO-A1-2012/143040
- RANDRIAMASY S ET AL: "ALTO Cost Schedule; draft-randriamasy-alto-cost-schedule-02.tx t", ALTO COST SCHEDULE; DRAFT-RANDRIAMASY-ALTO-COST-SCHEDULE-02.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-17, XP015088130, [retrieved on 2012-10-19]
- RANDRIAMASY S ET AL: "Multi-Cost ALTO; draft-randriamasy-alto-multi-cost-07.txt", MULTI-COST ALTO; DRAFT-RANDRIAMASY-ALTO-MULTI-COST-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 19 October 2012 (2012-10-19), pages 1-37, XP015088131, [retrieved on 2012-10-19]
- DANIELE MUNARETTO ET AL: "Online path selection for video delivery over cellular networks", GLOBECOM WORKSHOPS (GC WKSHPS), 2012 IEEE, IEEE, 3 December 2012 (2012-12-03), pages 1367-1372, XP032341582, DOI: 10.1109/GLOCOMW.2012.6477782 ISBN: 978-1-4673-4942-0
- INTERDIGITAL COMMUNICATIONS: "ALTO server in IMS P2P CDS", 3GPP DRAFT; S2-113325, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548608, [retrieved on 2011-07-05]

## Description

### FIELD OF THE INVENTION

The present invention relates to methods and systems for managing the quality-of-experience for content delivery applications.

### BACKGROUND OF THE INVENTION

Internet usage is increasing rapidly all over the globe and tends to be ubiquitous and accessible from various end-user devices, leading to an ever evolving data exchange, often downloading as much as uploading. Therefore, Internet services are expected to cope with mobility of end-users, massive service requests, and heterogeneous access technologies, while ensuring the best possible Quality-of-experience (QoE) to each user.

QoE shall be regarded as the manner in which the user perceives the quality of an application session in terms, for example, of latency, bit rate, freeze or rebuffering, impaired audio/video frames, application packet loss. More generally, QoE reflects the overall acceptability (i.e. sensation, perception, satisfaction) and opinion of users as they interact with the experienced service(s).

It follows that an accurate description of the qualitative performance of a content delivery application is more than ever of current interest for network operators. Such measure is particularly important for content delivery applications that are highly demanding on QoE, such as Peer-to-Peer (P2P) applications, real-time communications, Content Delivery Networks (CDN), on-demand video services, files sharing, files streaming, IPTV, or cloud-based applications. In fact, content delivery applications must often choose one or more suitable candidates from a selection of peers offering the same resource or service. The chosen candidate(s) for serving a user request has/have a direct impact on the experienced quality.

Accordingly, operators of application networks such as CDN endeavor to improve the QoE of their applications (such as video download or streaming) while transport network operators, i.e. ISPs, aim at minimizing the ever increasing transport costs induced by contemporary applications. In this regard, IETF has proposed a method for Application-Layer Traffic Optimization (ALTO). The ALTO IETF client-server protocol provides applications with guidance to select target endpoint(s) (i.e. peers, hosts, or application servers) from a set of candidates that are able to provide a desired data resource. This guidance is based on parameters that affect performance and efficiency of the data transmission between the hosts (such as the topological distance).

Indeed, in order to reduce the resource consumption in the underlying network infrastructure, ALTO path cost values as well as ALTO endpoint metrics should be provided by the network operator and/or any other party having visibility on the endpoint activity (such as CDN or Data Center (DC) operators) to the deployed ALTO servers. In return, ALTO servers provide requesting ALTO clients with information, currently such as the network operator-centric view on the network topology, and the candidate endpoints with attributes such as their routing cost or connectivity type. ALTO Servers are meant to provide information that cannot be gathered via end-to-end real-time like measurement tools and therefore ALTO does not cover information such as RTT or congestion specific metrics. The IETF ALTO Working Group is considering proposals to extend ALTO cost metrics to application metric impacting the QoE, such as end-to-end path bandwidth, utilized application endpoint (EP) storage capacity, utilized EP CPU and EP reliability. ALTO metrics such as EP load and capacity can be captured and provided by parties having visibility on the EP activity, such as CDN or Data Center operators. The present invention focuses on the provision to ALTO of non-real time and abstracted EP performance metrics reflecting QoE sensed at the End User side endpoints when they are connected to application endpoints covered by the serving ALSO server. Documents XP015088130 and XP015088131 disclose ALTO system. Nowadays, there is no tool for automatically provisioning ALTO servers with QoE information in a reliable way. In other words, there are currently no means and methods for feeding an ALTO database with an abstraction of QoE related costs.

One object of the present invention is to propose a method and a system for feeding an ALTO database with an abstraction of QoE related costs.

Another object of the present invention is to provide an application QoE monitoring system for collecting and processing ALTO cost-related information (such as impaired audio/video frames, application packet loss, latency, bit rate, freeze or rebuffering, server availability).

Another object of the present invention is to propose a method for populating ALTO servers with endpoint cost information related to QoE.

Another object of the present invention is to offer to CDN and DC providers the ability to optimize the QoE perceived by end-users for their applications.

Another object of the present invention is to enable CDN and DC providers to guarantee their customers (such as content providers, or application providers) with an optimal choice of their storage/resource locations.

Another object of the present invention is to provide application providers with appropriate endpoint(s) with regard to the QoE needs of their customers.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later. The invention is dislcosed in the appended claims. Various embodiments relate to methods for monitoring the quality-of-experience of an application available over a network, this method comprising the following steps
- measuring quality-of-experience related information on a client endpoint experiencing the application;
- collecting the measured quality-of-experience related information;
- organizing the collection of quality-of-experience related information with respect to a selection of application endpoints and operations timing rules set by an application layer traffic optimization system;
- abstracting the collected quality-of-experience related information so that enabling application-layer traffic optimization.

In accordance with one broad aspect, the above method may further comprise:
- a filtering step of the collected quality-of-experience related information so that retaining authorized and usable metrics for application-layer traffic optimization;
- an aggregation step of quality-of-experience related information in a central database or in a database associated to an application server making available the experienced application;
- a filtering step of the abstracted quality-of-experience related information according to predefined rules

In accordance with another broad aspect, the abstraction step includes an aggregation of the collected quality-of-experience over time and space, and a transcription of the collected quality-of-experience related information in application-layer traffic optimization semantics.

Further, various embodiments relate to systems for monitoring the quality-of-experience of an application available over a network, this system comprising:
- means for measuring quality-of-experience related information on a client endpoint experiencing the application;
- means for collecting measured quality-of-experience related information;
- means for organizing the collection of quality-of-experience related information with respect to a selection of application endpoints and operations timing rules set by an application layer traffic optimization system;
- means for abstracting the collected quality-of-experience related information so that enabling application-layer traffic optimization.

In accordance with a broad aspect, the above system may comprise:
- means for triggering the sending of the collected quality-of-experience related information to a database;
- means for selecting an application server making available the experienced application on the said client endpoint. These means include a predefined application-layer traffic optimization quality-of-experience endpoint cost map or a predefined application-layer traffic optimization quality-of-experience cost map.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

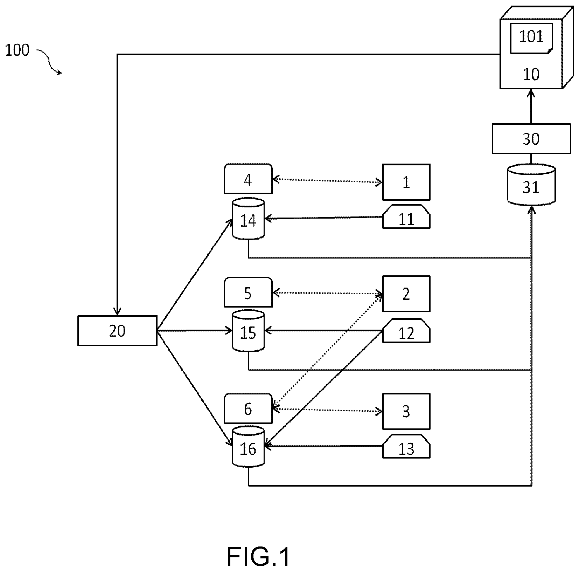

The objects, advantages and other features of various embodiments will become more apparent from the following disclosure and claims. The following non-restrictive description of preferred embodiments is given for the purpose of exemplification only with reference to the accompanying drawing in which FIG. 1 is a schematic diagram illustrating functional components according to various embodiments.

### DETAILED DESCRIPTION OF ILLUSTRATIVE EMBODIMENTS

With reference to figure 1, there is shown an ALTO based QoE cost aggregation system (AQAS) **100** including a plurality of application QoE monitoring systems (AQMS) **11-13** deployed, respectively, on client endpoints **1-3** so as to perform QoE measurements thereon.

Client endpoint **1-3** is meant here broadly and not restrictively, to include any end user equipment or software (such as network probing equipments, telephone handsets, smartphones, computers, personal digital assistants, mobile applications, or computer program products) capable of connecting to an application server **4-6** (i.e. a server, a data center, a cache, a server cluster, or more generally a source) making a service and/or a resource available to client endpoints **1-3.**

As illustrative examples of applications, one may refer to P2P applications, real-time communications, Content delivery networks, on-demand video services, files sharing, content downloading, multimedia streaming, IPTV, cloud-based applications, or virtual application involving several physical servers performing a service for a client Endpoint.

The application QoE monitoring system **11-13** is configured to capture the QoE perceived when the client endpoint **1-3** is connected to a given application server **4-6** (e.g. a video server). Illustrative examples of QoE metrics to be monitored and measured include application packet loss, frame error rate, freeze, content quality, delay, jitter, latency, throughput, client endpoint capabilities.

In fact, the application QoE monitoring system **11-13** measures ALTO QoE related information (for example, through measuring the parameters of the stream, parameters of the throughput, parameter of the connectivity, quality parameters of the received content, retrieving the client endpoint capabilities, utilized endpoint CPU, endpoint reliability), and communicates them to an AQMS database **14-16** associated to the application server **4-6** to which the client endpoint **1-3** is connected.

One client endpoint **2** may simultaneously connect to more than one application server **5-6.** Likewise, an AQMS database **14** may be associated to only one application server **4** or to a plurality of application servers.

Moreover, the application QoE monitoring system **11-13** may send measured QoE values to the corresponding AQMS database **14-16** in a scheduled or in an online mode.

Subsequently, ALTO-relevant QoE cost values are sent from the AQMS database **14-16** to a central database **31.**

Preferably, all measurements are communicated to the AQMS database **14-16,** and thereafter only authorized QoE metrics, which are ALTO usable metrics, are communicated to the central database **31.** Therefore, the AQMS databases **14-16** are further configured to filter, from QoE endpoint metrics, authorized ones that can be unveiled so as to be integrated in ALTO information.

Accordingly, the QoE endpoint metrics measurements are filtered then aggregated, by the AQMS databases **14-16,** in ALTO-relevant QoE measurements to be gathered in the central database **31.**

In one embodiment, only ALTO-relevant QoE cost values that relate to a selected set of application servers **4-6** are forwarded from their corresponding AQMS database **14-16** to the central database **31.** The selected application servers **4-6** are those registered in a predefined ALTO network map or a predefined ALTO QoE cost map.

To that end, the ALTO based QoE cost aggregation system (AQAS) **100** further comprises a first ALTO agent **20** configured to trigger the sending of ALTO QoE cost values from the appropriate AQMS database **14-16** to the central database **31,** according to instructions received from an ALTO server management entity **101.** In the depicted example, the management entity **101** is embedded within the ALTO server **10.** In an alternate embodiment, the management entity may be linked to the server 10 under the form of a separate component.

The first ALTO agent **20** downloads the ALTO QoE endpoints costs map (or the ALTO QoE costs map, i.e. cost maps provided with cost values among groups of application servers, noted Provider-defined IDentifiers (PIDs)) and requests application endpoint AQMS databases to send QoE measurements to the central AQMS database **31.**

In fact, the first ALTO agent **20** gets the identity of source application servers **4-6** on which monitoring the QoE is to be achieved, via its associated ALTO client by downloading the ALTO server's QoE Costs map. Given rules and frequency F1 set by the ALTO Server management entity **101,** the first ALTO agent **20** triggers AQMS requests on the application servers **4-6.** It also triggers AQMS databases **14-16** for sending the requested QoE measurements to the central database **31,** at a frequency F3 preferably lower than or equal to F1 and set by the ALTO server management entity **101.**

In an alternate system architecture, the first ALTO agent **20** triggers directly the application QoE monitoring system **11-13** for sending their QoE measurements to the central database **31.** Such is the case for example when there is no AQMS database **14** associated to a given application server **4** and all the measured QoE information is publishable in the central database **31.**

The collected ALTO QoE cost values in the central database **31** are sent to a second ALTO agent **30** configured to transcript these QoE measurements in ALTO semantics that reflect the performance of application server **4-6** in ALTO terms when connected to client endpoints **1-3.** Indeed, the second ALTO agent **30:**
- aggregates the application QoE measurements over time and space in a non-real time abstracted form of collected ALTO QoE Costs values. The aggregation rules may be set by the ALTO server management entity **101;**
- sends the resulting abstracted QoE cost values (such as application server occupation, impaired audio/video frames, application packet loss, freeze or rebuffering, bit rate, latency) to the ALTO server **10.**

The abstracted QoE Cost values are sent to the ALTO server **10** under conditions that they comply with a set reliability rules from the ALTO server management entity **101.** These rules may be based on parameters including, for example, the number of QoE measurements, the number of application flows, the popularity/hit rate, and the date of measurement, the capabilities of the application client.

In one embodiment, the abstracted ALTO QoE cost values are sent to the ALTO server **10** at a frequency F2 specified by the ALTO Server management entity **101.** It is to be noted that F1 and F3 are not necessarily synchronized with F2.

The second ALTO agent **30** may be configured to generate ALTO QoE information only for the application servers **4-6** that are registered directly in an ALTO QoE Endpoint Cost map or indirectly in an ALTO QoE Cost Map, downloaded, preferably periodically, from the ALTO server **10.**

Accordingly, the populating of an ALTO server with ALTO QoE costs on application server(s) **4-6** connected to client endpoints **1-3,** selected upon an ALTO Endpoint Cost Map, comprises the following steps:
- the first ALTO agent **20** gets the ALTO Endpoint Cost map to identify source application servers **4-6** and client endpoints **1-3** pairs on which to measure QoE and to identify the QoE metrics to measure. The input ALTO Endpoint Cost Map may be regularly downloaded into the first agent **20** (i.e. in a frequency F1) so as to have an updated set of application servers **4-6** and destination client endpoints **1-3** and QoE metric set on which to measure QoE. The update frequency F1 is specified by the ALTO server management entity **101** so as to provide statistically significant samples and meet the ALTO server time frame. Application servers **4-6** that are not yet monitored by the AQMS system **100** may be added in the ALTO server **100.** The latter send them along with an initial default Cost value to the first ALTO agent **20** or any other entity associated thereto;

- the transcription of QoE measures in ALTO protocol semantics is done on sets of measurements stored in the central database **31** and marked as both reliable and publishable by ALTO servers **10:**
   ∘ Marking can be done for instance by the second ALTO agent **30;**
   ∘ The abstracted AQMS measurements are aggregated over time and expressed in QoE Cost values according to the ALTO specified semantics and format;
   ∘ The ALTO QoE cost values are regularly sent to the ALTO server **10** in a frequency F2 specified by the ALTO server management entity **101,** according to the ALTO server information update rules.

Advantageously, the abstraction step of the application QoE measurements permits to protect the confidentiality of application servers **4-6** (and, consequently of their operators) performances.

In one embodiment, an ALTO client is configured to interface between the ALTO server **10** and the first ALTO agent **20.** For example, this ALTO client may be in charge of downloading the ALTO Cost map (or, the ALTO Endpoint Cost Map) from the ALTO server **10** so that ALTO agent **20** can identify pairs of source application servers **4-6** and destination application clients **1-3** on which to measure QoE.

In one embodiment, to differentiate ALTO costs among groups of several application servers **4-6** (for example, when located in servers farms), in order for example to differentiate between e.g. servers farms that represent sub-networks called ALTO PIDs, the second ALTO agent **30** first aggregates QoE values at the PID level (in other words, ALTO based QoE cost aggregation system **100** is for Option PID).

For Option PID, the ALTO client associated to the first ALTO agent **20** (or directly the first alto agent) gets an ALTO QoE Cost Map from the ALTO server **10** with default or current values of ALTO QoE Costs to monitor. Then, the first ALTO agent **20** builds the list of application servers **4-6** and client endpoint **1-3** to monitor by the AQMS **100,** by selecting those, covered by the AQMS **100,** that belong to a PID on the ALTO QoE Cost Map.

It is to be noted that at the transcription stage in the case of the option PID, the second ALTO agent **30** aggregates endpoints measurements spatially, before the aggregation step. In other words, the measurements samples on Source/Destination endpoints pairs are mapped to the source and destination PID pairs that they respectively belong to.

Advantageously, the ALTO based QoE Cost Aggregation System **100** permits
- an ALTO guided population of ALTO QoE endpoint costs when the first and second ALTO agents **20, 30** are configured for option endpoint (ALTO endpoint cost map); and
- an ALTO guided population of ALTO QoE Cost Maps when the first and second ALTO agents **20, 30** are configured for option PID.

A co-pending patent application entitled "QoE based ALTO endpoints tie break" filed by the same applicant, proposes a plurality of ALTO QoE costs (such as, latency, application packet loss (or video/audio frame error rate), bitrate, video quality score, re-buffering information) together with mechanisms to combine them with usual ALTO Costs for EP selection tiebreak.

In one embodiment, the central database **31** is directly fed with ALTO-relevant QoE costs that are measured, collected and processed by an application QoE monitoring system **11-13.**

Advantageously, the reporting of the ALTO QoE information from AQMS databases **14-16** to the central database **31** is coupled with a filtering function involving criteria such as popularity, number of measurements, frequency of measurements, client endpoint capabilities, to add reliability to the measurements. The reliability of the resulting ALTO QoE information is based on both the measured activity and the use of an updated ALTO QoE Cost Map or an ALTO Endpoint Cost Map. That means, the ALTO Server **10** may choose to provide QoE Cost values on either pairs of individual source/destination endpoints, or on QoE cost maps provided with cost values among groups of application servers, noted PIDs.

Advantageously, the above-described method for feeding the ALTO dedicated AQMS central database **31** may be triggered in either on-line mode (i.e. "on-demand") or scheduled mode.

It is to be noted that, in addition to central database **31** feeding, the application QoE monitoring systems **11-13** are further configured to run outside the ALTO framework.

Advantageously, the application QoE monitoring systems **11-13** may be customized to interwork with any ALTO server **10** and can be the one distributed by Alcatel Lucent® and disclosed in the European Patent Application published under the number EP 2 400 758 A1, hereafter referred to as VITALU.

In an illustrative embodiment, the application is a video streaming and the AQMS **100** utilizes the above-cited tool VITALU which permits to measure the QoE of a video stream. In particular, VITALU can evaluate/monitor the QoE for root cause of multimedia delivery issues. VITALU handles multiple streaming protocols such as HTTP Live, RTSP, RTP Multicast, or Flash HTTP. VITALU is part of service offer portfolio for operator customers.

VITALU provides functions for each monitored video flow, such as
- measure, collect and analyze IP network info (such as packet loss, jitter, delay, timestamp, sequence number);
- compute video quality metrics (video score, Erroneous Seconds Ratio (ESR), frame error, Freeze);
- provide frame by frame analysis, with jitter buffer simulation for RTP protocol.

The metrics measured by VITALU include: DateTime Capture (s), Date, Spot#, Clip Name, Resolution, Operator, Session ID, RTT Avg, RTT Std, RTT Max, Video Access Time (s), Video Duration (s), Stream Duration (s), Video Bitrate (bps), VQS Avg (Real), VQS Avg (Theor.), VQS Std (Real), VQS Std (Theor.), Frame Error ESR5_20 (%), Freeze ESR5_20 (%), ESR5_20 Nb Windows, Nb of Freezes, Freeze Duration (Avg) (s), Freeze Duration (Max) (s), Nb of Error Frames, Nb. of Packets, Packets Retransmitted (%), Nw Video Jitter (Avg) (s), Nw Video Jitter (Max) (s), Nw Bitrate (Avg) (bps), Nw Bitrate (Std) (bps), Late & Err. Frame Ratio (%), Frame Rate (Avg) (fps), Frame Rate (Std) (fps), Nb of Frame Resolutions, Frame Resolution (px).

In one embodiment, only a restricted set of VITALU metrics are sent to the central database **31** for abstraction into aggregated ALTO QOE metrics by the second ALTO agent **30.** These QoE metrics may include Freeze or re-buffering, impaired frame ratio (Frame error ESR5_20 (%), or late and erroneous frame ratio), application packet loss, video quality score (VQS), flow jitter (video jitter).

Referring again to figure 1, a VITALU client (namely, an application QoE monitoring system **11-13)** runs online or in a scheduled mode on client endpoints **1-3,** and computes VITALU QoE metrics on the captured video flows from the application servers **4-6.** The VITALU client (namely, an application QoE monitoring system **11-13)** sends the VITALU QoE measurements to the VITALU databases associated to the application servers **14-16** (there can be one database per application server or per set of application servers). The requests for QoE measurement are sent by the first ALTO Agent **20** at frequency F1 to the endpoints VITALU databases **14-16.** Then, these databases **14-16** send VITALU QoE measurements directly to the central ALTO dedicated VITALU database **31** at frequency F3. Only VITALU QoE measurements that are authorized (usable) by ALTO are sent. Accordingly, the second ALTO agent **30** establishes the reliability of VITALU QoE measurement per application server against parameters such as number of QoE measurements, number of application flows, popularity/hit rate, and/or date of measurement.

In another embodiment, the VITALU clients (i.e. application QoE monitoring systems **11-13)** may be configured to send their QoE measurements directly to the central database **31.** In such a configuration, the first ALTO agent **20** requests the VITALU clients to monitor the selected endpoints.

Advantageously, the above-described methods and systems provide
- an ALTO guided automation of application QoE monitoring for populating an ALTO server **10;** and
- means for ALTO protocol to select application servers **4-6** (P2P, CDN, DC servers) with regard to end-user QoE metrics.

Further, the disclosed embodiments are, advantageously, a reliable way to provide QoE cost metrics associated to an application server **4-6** (thanks to aggregation and filtering of collected QoE measurements).

## Claims

1. A method for managing the monitored quality-of-experience of an application available over a network on a set of application endpoints (4-6), this method comprising the following steps
- measuring quality-of-experience related information on a client endpoint **(1-3)** experiencing the application;
- collecting the measured quality-of-experience related information;
- organizing the collection of quality-of-experience related information with respect to a selection of application endpoints and a frequency set by an application layer traffic optimization system;
- abstracting the organized quality-of-experience related information in a compliant application-layer traffic optimization format so that enabling application-layer traffic optimization.

2. The method of claim 1, further comprising a step of filtering the collected quality-of-experience related information in order to retain authorized and usable metrics for application-layer traffic optimization.

3. The method of claim 1 or 2, further comprising a step of aggregating quality-of-experience related information in a central database (31).

4. The method of claim 1 or 2, further comprising a step of aggregating quality-of-experience related information in a database (14-**16)** associated with an application endpoint **(4-6)** making the experienced application available.

5. The method of any of the preceding claims, further comprising a step of sending aggregated quality-of-experience related information to a central database **(31).**

6. The method of any of the preceding claims, further comprising a step of triggering, according to a predefined condition, a management entity **(101)** of an ALTO server **(10)** to send aggregated quality-of-experience related information.

7. The method according to claim 6, wherein the predefined condition is that the application server **(4-6)** belongs to a predefined application-layer traffic optimization quality-of-experience cost map.

8. The method of the claim 6, wherein the predefined condition is that the client endpoint belongs to a predefined application-layer traffic optimization quality-of-experience cost map.

9. The method of the claim 6, wherein the predefined condition is that the application endpoint belongs to a predefined application-layer traffic optimization quality-of-experience endpoint cost map.

10. The method of the claim 6, wherein the predefined condition is that the client endpoint belongs to a predefined application-layer traffic optimization quality-of-experience endpoint costmap.

11. The method of any of the preceding claims, wherein the abstraction step includes an aggregation of the collected quality-of-experience over time and space.

12. The method of any the preceding claims wherein the abstracting step includes a transcription of the collected quality-of-experience related information in application-layer traffic optimization semantics.

13. The method of any of the preceding claims, further comprising a filtering step of the abstracted quality-of-experience related information according to predefined rules.

14. A system for managing the monitored quality-of-experience of an application available over a network, this system comprising
- means **(11-13)** for measuring quality-of-experience related information on a client endpoint **(1-3)** experiencing the application;
- means for collecting the measured quality-of-experience related information;
- means for organizing the collection of quality-of-experience related information with respect to a selection of application endpoints and frequency set by an application layer traffic optimization system;
- means **(30)** for abstracting the organized quality-of-experience related information in a compliant application-layer traffic optimization format so that enabling application-layer traffic optimization.

15. The system of the preceding claim, further comprising means (20) for triggering the sending of the collected quality-of-experience related information to a database.

16. The system of claim 14 or 15, further comprising means **(20)** for selecting an application endpoint making available the experienced application on the said client endpoint.

17. The system of claim 16, wherein the predefined means **(20)** for selecting the application endpoint include a predefined application-layer traffic optimization quality-of-experience endpoint cost map or a predefined application-layer traffic optimization quality-of-experience cost map.

## Patentansprüche

1. Verfahren zum Verwalten der überwachten Erlebnisqualität einer Anwendung, die verfügbar ist über ein Netzwerk in einem Satz von Anwendungsendpunkten (4-6), wobei das Verfahren die folgenden Schritte umfasst
- Messen der auf die Erlebnisqualität bezogenen Information an einem Kundenendpunkt (1-3), der die Anwendung erlebt;
- Sammeln der gemessenen auf die Erlebnisqualität bezogenen Information;
- Organisieren der Sammlung der auf die Erlebnisqualität bezogenen Information in Bezug auf eine Auswahl von Anwendungsendpunkten und eines Frequenzsatzes durch ein Optimierungssystem für den Anwendungsschichtverkehr;
- Abstrahieren der organisierten auf die Erlebnisqualität bezogenen Information in einem konformen Optimierungsformat für den Anwendungsschichtverkehr, sodass eine Optimierung des Anwendungsschichtverkehrs ermöglicht wird.

2. Verfahren nach Anspruch 1, weiterhin umfassend einen Schritt zum Filtern der gesammelten auf die Erlebnisqualität bezogenen Information, um autorisierte und verwendbare Metriken zurückzuhalten für die Optimierung des Anwendungsschichtverkehrs.

3. Verfahren nach Anspruch 1 oder 2, weiterhin umfassend einen Schritt zum Bündeln von auf die Erlebnisqualität bezogener Information in einer zentralen Datenbank (31).

4. Verfahren nach Anspruch 1 oder 2, weiterhin umfassend einen Schritt zum Bündeln von auf die Erlebnisqualität bezogener Information in einer Datenbank (14-16), die mit einem Anwendungsendpunkt (4-6) verbunden ist, der die erfahrene Anwendung verfügbar macht.

5. Verfahren nach einem beliebigen der vorhergehenden Ansprüche, weiterhin umfassend einen Schritt zum Senden gebündelter auf die Erlebnisqualität bezogener Information an eine zentrale Datenbank (31).

6. Verfahren nach eine beliebigen der vorhergehenden Ansprüche, weiterhin umfassend einen Schritt des Auslösens, gemäß einer vordefinierten Bedingungen, einer Verwaltungsentität (101) eines ALTO-Servers (10) zum Senden gebündelter Erlebnisqualitätsinformation.

7. Verfahren nach Anspruch , wobei die vordefinierte Bedingung ist, dass der Anwendungsserver (4-6) zu einer vordefinierten Kostenkarte zur Optimierung der Erlebnisqualität von Anwendungsschichtverkehr gehört.

8. Verfahren nach Anspruch 6, wobei die vordefinierte Bedingung ist, dass der Kundenendpunkt zu einer vordefinierten Kostenkarte zur Optimierung der Erlebnisqualität von Anwendungsschichtverkehr gehört.

9. Verfahren nach Anspruch 6, wobei die vordefinierte Bedingung ist, dass der Anwendungsendpunkt zu einer vordefinierten Endpunktkostenkarte zur Optimierung der Erlebnisqualität von Anwendungsschichtverkehr gehört.

10. Verfahren nach Anspruch 6, wobei die vordefinierte Bedingung ist, dass der Kundenendpunkt zu einer vordefinierten Endpunktkostenkarte zur Optimierung der Erlebnisqualität von Anwendungsschichtverkehr gehört.

11. Verfahren nach einem beliebigen der vorhergehenden Ansprüche, wobei der Abstraktionsschritt einschließt eine Bündelung der gesammelten Erlebnisqualität über Zeit und Raum.

12. Verfahren nach einem beliebigen der vorhergehenden Ansprüche, wobei der Abstraktionsschritt einschließt eine Transkription der gesammelten auf die Erlebnisqualität bezogenen Information in einer Optimierungssemantik für den Anwendungsschichtverkehr.

13. Verfahren nach einem beliebigen der vorhergehenden Ansprüche, weiterhin umfassend einen Schritt zum Filtern der entnommenen, auf die Erlebnisqualität bezogenen Information gemäß vordefinierten Regeln.

14. System zum Verwalten der überwachten Erlebnisqualität einer Anwendung, die verfügbar ist über ein Netzwerk, wobei dieses System umfasst
- Mittel (11-13) zum Messen der auf die Erlebnisqualität bezogenen Information an einem Kundenendpunkt (1-3), der die Anwendung erlebt;
- Mittel zum Sammeln der gemessenen auf die Erlebnisqualität bezogenen Information;
- Mittel zum Organisieren der Sammlung der auf die Erlebnisqualität bezogenen Information in Bezug auf eine Auswahl von Anwendungsendpunkten und eines Frequenzsatzes durch ein Optimierungssystem des Anwendungsschichtverkehrs;
- Mittel (30) zum Abstrahieren der organisierten auf die Erlebnisqualität bezogenen Information in einem konformen Optimierungsformat für den Anwendungsschichtverkehr, sodass eine Optimierung des Anwendungsschichtverkehrs ermöglicht wird.

15. System nach dem vorhergehenden Anspruch, weiterhin umfassend ein Mittel (20) zum Auslösen des Sendens der gesammelten Information zur Erlebnisqualität an eine Datenbank.

16. System nach Anspruch nach Anspruch 14 oder 15, weiterhin umfassend ein Mittel (20) zum Auswählen eines Anwendungsendpunktes unter Verfügbarmachen der erlebten Anwendung auf besagtem Kundenendpunkt.

17. System nach Anspruch nach Anspruch 16, wobei das vordefinierte Mittel (20) zum Auswählen des Anwendungsendpunktes einschließt eine vordefinierte Endpunktkostenkarte zur Optimierung der Erlebnisqualität von Anwendungsschichtverkehr oder eine vordefinierte Kostenkarte zur Optimierung der Erlebnisqualität von Anwendungsschichtverkehr.

## Revendications

1. Procédé de gestion de la qualité d'expérience surveillée d'une application disponible sur un réseau sur un ensemble de points de terminaison d'application (4-6), ce procédé comprenant les étapes suivantes
- une mesure d'informations liées à une qualité d'expérience sur un point de terminaison client (1-3) expérimentant l'application ;
- une collecte des informations liées à une qualité d'expérience mesurée ;
- une organisation de la collecte d'informations liées à une qualité d'expérience par rapport à une sélection de points de terminaison d'application et à une fréquence définie par un système d'optimisation de trafic en couche d'application ;
- une indexation des informations liées à une qualité d'expérience organisées dans un format d'optimisation de trafic en couche d'application conforme de sorte à permettre une optimisation de trafic en couche d'application.

2. Procédé selon la revendication 1, comprenant en outre une étape de filtrage des informations liées à une qualité d'expérience collectées afin de conserver des métriques autorisées et utilisables pour une optimisation de trafic en couche d'application.

3. Procédé selon la revendication 1 ou 2, comprenant en outre une étape d'agrégation d'informations liées à une qualité d'expérience dans une base de données centrale (31).

4. Procédé selon la revendication 1 ou 2, comprenant en outre une étape d'agrégation d'informations liées à une qualité d'expérience dans une base de données (14-16) associée à un point de terminaison d'application (4-6) rendant l'application expérimentée disponible.

5. Procédé selon l'une quelconque des revendications précédentes, comprenant en outre une étape d'envoi d'informations liées à une qualité d'expérience agrégées vers une base de données centrale (31).

6. Procédé selon l'une quelconque des revendications précédentes, comprenant en outre une étape de déclenchement, selon une condition prédéfinie, d'une entité de gestion (101) d'un serveur ALTO (10) pour envoyer des informations liées à une qualité d'expérience agrégées.

7. Procédé selon la revendication 6, dans lequel la condition prédéfinie est que le serveur d'application (4-6) appartienne à une cartographie de coût de qualité d'expérience d'optimisation de trafic en couche d'application prédéfinie.

8. Procédé selon la revendication 6, dans lequel la condition prédéfinie est que le point de terminaison client appartienne à une cartographie de coût d'expérience de qualité d'optimisation de trafic en couche d'application prédéfinie.

9. Procédé selon la revendication 6, dans lequel la condition prédéfinie est que le point de terminaison d'application appartienne à une cartographie de coût de point de terminaison de qualité d'expérience d'optimisation de trafic en couche d'application prédéfinie.

10. Procédé selon la revendication 6, dans lequel la condition prédéfinie est que le point de terminaison client appartienne à une cartographie de coût de point de terminaison de qualité d'expérience d'optimisation de trafic en couche d'application prédéfinie.

11. Procédé selon l'une quelconque des revendications précédentes, dans lequel l'étape d'indexation inclut une agrégation de la qualité d'expérience collectée dans le temps et l'espace.

12. Procédé selon l'une quelconque des revendications précédentes dans lequel l'étape d'indexation inclut une transcription des informations liées à une qualité d'expérience collectées en sémantiques d'optimisation de trafic en couche d'application.

13. Procédé selon l'une quelconque des revendications précédentes, comprenant en outre une étape de filtrage des informations liées à une qualité d'expérience indexées selon des règles prédéfinies.

14. Système de gestion de la qualité d'expérience surveillée d'une application disponible sur un réseau, ce système comprenant
- un moyen (11-13) de mesure d'informations liées à une qualité d'expérience sur un point de terminaison client (1-3) expérimentant l'application ;
- un moyen de collecte des informations liées à une qualité d'expérience mesurées ;
- un moyen d'organisation de la collecte d'informations liées à une qualité d'expérience par rapport à une sélection de points de terminaison d'application et à une fréquence définie par un système d'optimisation de trafic en couche d'application ;
- un moyen (30) d'indexation des informations liées à une qualité d'expérience organisées dans un format d'optimisation de trafic en couche d'application conforme afin de permettre une optimisation de trafic en couche d'application.

15. Système selon la revendication précédente, comprenant en outre un moyen (20) de déclenchement de l'envoi des informations liées à une qualité d'expérience collectées vers une base de données.

16. Système selon la revendication 14 ou 15, comprenant en outre un moyen (20) de sélection d'un point de terminaison d'application rendant disponible l'application expérimentée sur ledit point de terminaison client.

17. Système selon la revendication 16, dans lequel le moyen (20) prédéfini de sélection du point de terminaison d'application inclut une cartographie de coût de point de terminaison de qualité d'expérience d'optimisation de trafic en couche d'application prédéfinie ou une cartographie de coût de qualité d'expérience d'optimisation de trafic en couche d'application prédéfinie.
